# EUROPEAN PATENT APPLICATION

(11) **EP 4 001 020 A1**
(43) Date of publication of application: **25.05.2022**
(21) Application number: 21208009.7
(22) Date of filing: 12.11.2021
(51) Int. Cl.: B60R 16/03, B60L 50/16, B60L 58/18, H02J 7/00, H02J 7/14, B60R 16/04

(54) **ALL-TERRAIN VEHICLE AND METHOD FOR POWERING ALL-TERRAIN VEHICLE**

(30) Priority: 13.11.2020 CN 202022637524 U
(71) Applicant: Segway Technology Co., Ltd., Changzhou City, Jiangsu 213100 (CN)
(72) Inventor: ZHANG, Liang, Changzhou Cit, 213100 (CN)
(74) Representative: Sticht, Andreas

(57) **Abstract**

The present application discloses an all-terrain vehicle and a method for powering the all-terrain vehicle. The all-terrain vehicle includes: a frame; at least one seat arranged on the frame; a first device; a second device being a micro-control unit, a required electric power of the first device being greater than a required electric power of the second device, and the first device having a lower stability requirement for a power supply voltage than the second device; and a power supply system arranged behind the at least one seat and comprising a first power source and a second power source. The first power source is configured to supply power to a first device. The second power source is configured to supply power to a second device of the all-terrain vehicle.

## Description

### TECHNICAL FIELD

The present application relates to the field of power supply, especially to an all-terrain vehicle, a power supply system for an all-terrain vehicle and a method for powering an all-terrain vehicle.

### BACKGROUND

All-terrain vehicles include a large number of electrical devices, some of which have high electric power. In the related art, when the power supply system for the all-terrain vehicle supplies power to devices having high electric power, it may cause the voltage of the power supply system to be unstable, and cause a loss/damage of some devices that require high stability of the power supply voltage.

### SUMMARY

In order to solve the related technical problems, embodiments of the present application provide an all-terrain vehicle, a power supply system for an all-terrain vehicle and a method for powering the all-terrain vehicle.

The embodiments of the present application are realized as follows:

An embodiment of the present application provides an all-terrain vehicle, comprising: a frame; at least one seat arranged on the frame; a first device; a second device being a micro-control unit, a required electric power of the first device being greater than a required electric power of the second device, and the first device having a lower stability requirement for a power supply voltage than the second device; a power supply system arranged behind the at least one seat, the power supply system comprising a first power source and a second power source. The first power source is configured to supply power to the first device; and the second power source is configured to supply power to the second device.

An embodiment of the present application provides a method for powering the all-terrain vehicle according to one of claims 1-10, the all-terrain vehicle comprising a first power source configured to supply power to a first device of the all-terrain vehicle and a second power source configured to supply power to a micro-control unit of the all-terrain vehicle, the first device comprising an engine, the method comprising: powering on the all-terrain vehicle; determining whether an engine in the first device is in an operating state; and turning on a switch unit of the all-terrain vehicle to switch on a connection between the second power source and an electric generator of the all-terrain vehicle when it is determined that the engine is in an operating state, such that the electric generator supplies power to both the first power source and the second power source.

An embodiment of the present application provides a power supply system for an all-terrain vehicle, including: a first power source and a second power source. The first power source is configured to supply power to a first device of the all-terrain vehicle. The second power source is configured to supply power to a second device of the all-terrain vehicle. A required electric power of the first device is greater than a required electric power of the second device, and the first device has a lower stability requirement for power supply voltage than the second device.

In one or more embodiments of the present application, the all-terrain vehicle further comprises an electric generator configured to generate electric energy; and the electric energy generated by the electric generator is used to supply power to the first power source and the second power source.

In one or more embodiments of the present application, the power supply system further includes a switch unit; where the electric generator is configured to supply power to the second power source when the switch unit switches on the connection between the second power source and the electric generator.

In one or more embodiments of the present application, the switch unit is configured to switch on the connection between the second power source and the electric generator when receiving a first signal, the first signal indicating that startup of the all-terrain vehicle is completed.

In one or more embodiments of the present application, the switch unit is configured to switch off the connection between the second power source and the electric generator when receiving a second signal, the second signal indicating that the first device needs to be started.

In the above solution, the switch unit is configured to switch on the connection between the second power source and the electric generator when receiving a third signal, the third signal indicating that the first device is turned off.

In one or more embodiments of the present application, the switch unit includes a relay; where the switch unit is configured to switch on the connection between the second power source and the electric generator when the relay is in a pick-in state.

In one or more embodiments of the present application, the first device includes at least one of the following: a starter motor; an on-board air conditioner; an on-board audio; or a winch motor; where the starter motor is configured to start an engine of the all-terrain vehicle; the first power source is specifically configured to supply power to the starter motor when the engine needs to be started; and the starter motor is further configured to operate and drive the engine to start after being supplied with power.

In one or more embodiments of the present application, the second device includes at least one of the following: a vehicle control unit; an engine control unit; or a motor control unit.

Embodiments of the present application also provide an all-terrain vehicle. The all-terrain vehicle includes a first seat and a second seat arranged in parallel, and the power supply system for the all-terrain vehicle according to any one of the embodiments described above; where a first power source of the power supply system is arranged behind the first seat; and a second power source of the power supply system is arranged behind the second seat.

In one or more embodiments of the present application, a first partition is arranged between a rear part of the first seat and an engine, and the first power source is arranged on the first partition; and a second partition is arranged between a rear part of the seat and the engine, and the second power source is arranged on the second partition.

Embodiments of the present application provide a power supply system for an all-terrain vehicle and the all-terrain vehicle. The power supply system for the all-terrain vehicle includes a first power source and a second power source; the first power source is configured to supply power to a first device of the all-terrain vehicle; the second power source is configured to supply power to a second device of the all-terrain vehicle; where a required electric power of the first device is greater than a required electric power of the second device, and the first device has a lower stability requirement for power supply voltage than the second device. The all-terrain vehicle includes the power supply system. In solutions of embodiments of the present application, the second power source separately supplies power to the second device having the high stability requirement for the power supply voltage. Since the second power source does not need to supply power to the first device having a high electric power, the voltage supplied by the second power source to the second device can maintain stability. In this way, the loss/damage of the second device of the all-terrain vehicle caused by large fluctuation of the power supply voltage when supplying power to the all-terrain vehicle may be reduced, the service life of the second device may be prolonged, and the operating efficiency of the power supply system for the all-terrain vehicle can be improved.

### BRIEF DESCRIPTION OF THE DRAWINGS

Figs. 1 is a schematic structural diagram of a power supply system for an all-terrain vehicle according to an embodiment of the present application;
Figs. 2 is a schematic structural diagram of another power supply system for an all-terrain vehicle according to an embodiment of the present application;
Figs. 3 is a schematic structural diagram of a third power supply system for an all-terrain vehicle according an embodiment of the present application;
Fig. 4 is a schematic work flow diagram of the power supply system for the all-terrain vehicle according to an embodiment of the present application;
Fig. 5 is a schematic structural diagram of an all-terrain vehicle according an embodiment of the present application.

### DETAILED DESCRIPTION

The embodiments of the present application are further described in detail below, in conjunction with the drawings and the embodiments.

Some of the devices in all-terrain vehicles (ATVs) have high electric power, such as a starter motor, an on-board air conditioner, an on-board audio and a winch motor, etc. Meanwhile, ATVs include some devices having a high stability requirement for power supply voltage, such as Vehicle Control Unit (VCU), Engine Control Unit (ECU) and Motor Control Unit (MCU), etc. In related technologies, a same power source usually supplies power to all electrical devices. In some special scenarios (that is, when users use device having high electric power), the power supply voltage output by the power source will fluctuate greatly. Large fluctuation of the power supply voltage will cause loss/damage of some of the above-mentioned device have a high stability requirement for the power supply voltage, shorten the service life of the device having a high stability requirement for the power supply voltage, and reduce the operating efficiency of the power supply system for the all-terrain vehicles.

Based on this, in various embodiments of the present application, a second power source separately supplies power to a second device having a high stability requirement for the power supply voltage. Since the second power source does not need to supply power to a first device having high electric power, the voltage supplied by the second power source to the second device can maintain stability. In this way, the loss/damage of the second device caused by the large fluctuation of the power supply voltage when supplying power to the all-terrain vehicle may be reduced, the service life of the second device may be prolonged, and the operating efficiency of the power supply system for the all-terrain vehicle may be improved.

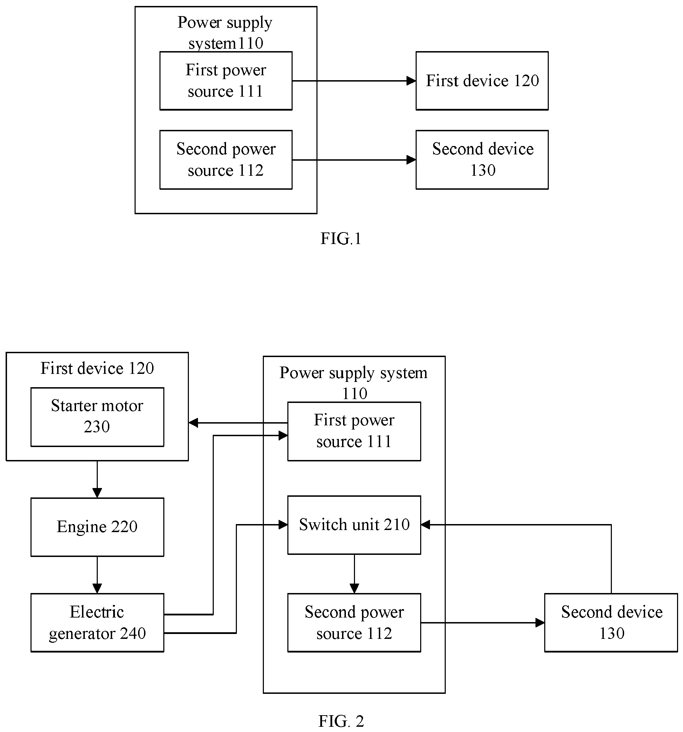

Embodiments of the present application provide a power supply system for an all-terrain vehicle, as illustrated in FIG. 1, the power supply system for the all-terrain vehicle 110 includes: a first power source 111 and a second power source 112.

The first power source 111 is configured to supply power to a first device 120 of the all-terrain vehicle; the second power source 112 is configured to supply power to a second device 130 of the all-terrain vehicle; a required electric power of the first device 120 is greater than a required electric power of the second device 130, the first device 120 has a lower stability requirement for power supply voltage than the second device 130.

Hence, since the second power source 112 only supplies power to the second device 130 and does not need to supply power to the first device 120, thus the loss/damage of the second device 130 caused by the fluctuation of the power supply voltage when user uses the first device 120 may be avoided, the stability of the supply power output by the second power source 112 to the second device 130 may be ensured, the service life of the second device may be prolonged, and the operating efficiency of the power supply system for the all-terrain vehicle can be improved.

In an embodiment, the first device 120 may include at least one of a starter motor; an on-board air conditioner; an on-board audio; or a winch motor.

Here, the starter motor is configured to start an engine of the all-terrain vehicle; correspondingly, the first power source 111 is specifically configured to supply power to the starter motor when the engine needs to be started; after being supplied with power, the starter motor operates and drives the engine to start; after the engine is started, the engine operates and drives a electric generator of the all-terrain vehicle to generate electricity; the electric generator is configured to generate electric energy; the electric energy generated by the electric generator is used to supply power to the first power source 111 and the second power source 112.

In an embodiment, the second device 130 may include at least one of the following: a vehicle control unit; an engine control unit; or a motor control unit.

In actual application, the second device 130 may also include any micro-control unit of the all-terrain vehicle, such as an instrument control unit (ICU), auxiliary power unit (APU), etc. The second power source 112 supplies power to each micro-control unit included in the second device 130.

In actual application, in order to further enhance the stability of the power supply voltage output by the second power source 112, and avoid the power supply voltage output by the second power source 112 being affected by the fluctuation of the power supply voltage output by the first power source 111, a switch unit may be provided on the circuit path where the electric generator supplies power to the second power source 112, the switch unit is made to switch off the connection between the electric generator and the second power source 112 when user uses the first device 120, in this way, the power supply voltage output by the second power source 112 being affected by the fluctuation of the power supply voltage output by the first power source 111 can be avoided, and the stability of the power supply voltage output by the second power source 112 is enhanced further.

Based on this, in an embodiment, as illustrated in FIG.2, the first device 120 includes a start motor 230, after supplied with power, the starter motor 230 operates and drives the engine 220 to start; after started, the engine 220 operates and drives a electric generator 240 to generate electricity; the electric energy generated by the electric generator 240 is used to supply power to the first power source 111 and the second power source 112; the power supply system 110 may further include a switch unit 210.
the electric generator 240 supplies power to the second power source when the switch unit 210 switches on the connection between the second power source 112 and the electric generator 240.

Specifically, in actual application, when the switch unit 210 switches on the connection between the second power source 112 and the electric generator 240, the electric generator 240 can supply power to the second power source 112 after the all-terrain vehicle is started. Of course, when the switch unit 210 does not switch on the connection between the second power source 112 and the electric generator 240, the generator 240 cannot supply power to the second power source 112.

Based on this, in an embodiment, the switch unit 210 switches on the connection between the second power source 112 and the electric generator 240 when receiving a first signal; and the first signal indicates that the all-terrain vehicle has finished starting up.

Here, the first signal may be sent to the switch unit 210 by any one of the micro-control units included in the second device 130.

In actual application, specifically, the switch unit 210 switches on the connection between the second power source 112 and the electric generator 240 when startup of the all-terrain vehicle is completed, and the starter motor 230 has started the engine 220 successfully, such that the electric generator 240 supplies power to the second power source 112; that is, the second device 130 may send the first signal to the switch unit 210 when it is determined that startup of the all-terrain vehicle is completed, and the starter motor 230 has started the engine 220 successfully. Here, any one of the micro-control units included in the second device 130 may determine whether the engine 220 is successfully started by detecting the rotation speed of the engine 220. For example, when it is detected that the rotation speed of the engine 220 is 0, the second device 130 may determine that the engine 220 is not started; for another example, when it is detected that the rotation speed of the engine 220 stabilizes in a first duration (which can be set according to demands, such as 5 milliseconds) at a first value (which can be set according to demands, such as 2000 revolutions per second), it can be determined that the startup of the engine 220 is completed.

In actual application, when the user needs to use the first device 120, the switch unit 210 switches off the connection between the second power source 112 and the electric generator 240.

Based on this, in an embodiment, the switch unit 210 switches off the connection between the second power source 112 and the electric generator 240 when receiving a second signal; the second signal indicates that the first device 120 needs to be started.

Here, the second signal may be sent to the switch unit 210 by any one of the micro-control units included in the second device 130.

In actual application, any one of the micro-control units included in the second device 130 determines if the first device 120 needs to be started in a way set according to demands. Exemplarily, any one of the micro-control units included in the second device 130 may determine whether the engine 220 needs to be started by detecting the user operation on the all-terrain vehicle; or, any one of the micro-control units included in the second device 130 can determine whether the first power source 111 and the second power source 112 need power supply by detecting if state of charge (SOC) of the first power source 111 and the second power source 112 is less than a first threshold (which can be set according to demand, such as 30%), and determine the electric generator 220 needs to be started when it is determined that the first power source 111 and the second power source 112 need power supply; or, any one of the micro-control units included in the second device 130 may also determine whether it is necessary to start the on-board air conditioner and/or the on-board audio and/or the winch motor by detecting the user operation on the all-terrain vehicle.

In actual application, the switch unit 210 switches on the connection between the second power source 112 and the electric generator 240 when it is determined that the first device 120 is powered off.

Based on this, in an embodiment, the switch unit 210 switches on the connection between the second power source 112 and the electric generator 240 when receiving a third signal; the third signal indicates that the first device 120 is turned off.

Here, the third signal may be sent to the switch unit 210 by any one of the micro-control units included in the second device 130.

In actual application, any one of the micro-control units included in the second device 130 determines if the first device 120 is turned off in a way set according to demands. Exemplarily, any one of the micro-control units included in the second device 130 may determine the start motor 230 is turned off by determining that the engine 220 is successfully started; or any one of the micro-control units included in the second device 130 determines if the on-board air conditioner and/or the on-board audio and/or the winch motor is turned off by detecting the user operation on the all-terrain vehicle.

In actual application, the switch unit 210 may be realized by a relay.

Based on this, in an embodiment, the switch unit 210 may include a relay; where when the relay is in a pick-in state, the switch unit 210 switches on the connection between the second power source 112 and the electric generator 240.

Here, when the relay is in a disconnecting state, the switch unit 210 does not switch on the connection between the second power source 112 and the electric generator 240, that is the switch unit 210 switches off the connection between the second power source 112 and the electric generator 240.

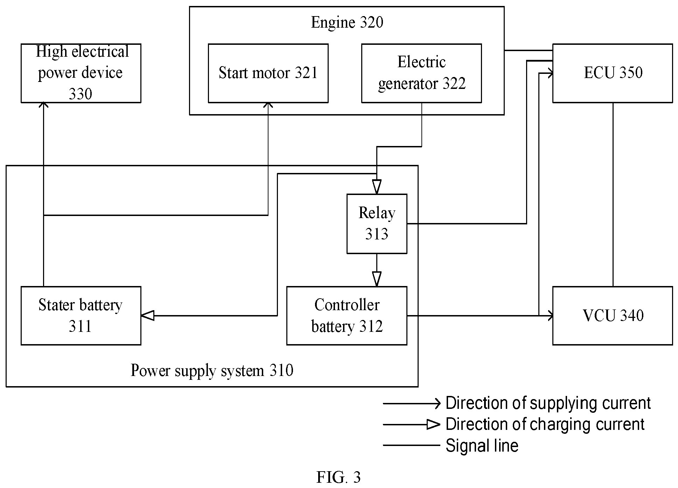

Exemplarily, in actual application, after the above power supply system is arranged in the all-terrain vehicle, as illustrated in FIG.3, the power supply system 310 may include a starter battery 311, a controller battery 312, and a relay 313; the all-terrain vehicle may include an engine 320, a high-power device 330, a VCU 340, and an ECU 350; the engine 320 may include a starter motor 321 and electric generator 322; where the starter battery 311 is configured to supply power to the high-power device 330 when the high-power device 330 is used, and power the starter motor 321 when the engine 320 needs to be started; after supplied with power, the starter motor 321 operates and drives the engine 320 to start; after started, the engine 320 operates and drives a electric generator 322 to generate electricity; the electric energy generated by the electric generator 322 is configured to supply power to the starter battery 311 and the controller battery 312; the controller battery 312 is configured to supply power to the VCU 340 and the ECU 350; the VCU 340 may determine whether the engine 320 and the high-power device 330 need to be started by detecting the user operation on the all-terrain vehicle; and send corresponding instruction signals to the ECU 350; the ECU 350 is configured to send a disconnecting signal to the relay 313 when starting the engine 320 or using the high-power device 330, and send a pick-in signal to the relay 313 when the engine 320 is started or the high-power device 330 is turned off. Since the controller battery 312 only supplies power to the VCU 340 and the ECU 350 and does not participate in the power supply process when starting the engine 320 or using the high-power device 330, the stability of the power supply voltage of the controller battery 312 is guaranteed, the instability issue of system voltage of the power supply system when using the high-power device 330 and starting the engine 320 in related technologies is avoided, and loss/damage of the VCU 340 and the ECU 350 when the power supply system for the all-terrain vehicle supplies power is reduced, reliability and stability of the VCU 340 and the ECU 350 is enhanced, the service life of the VCU 340 and the ECU 350 is prolonged, and the operating efficiency of the power supply system for the all-terrain vehicle is improved.

Here, it should be noted that the function of the power supply system 310 is equivalent to the function of the power supply system 110 described above; the function of the starter battery 311 is equivalent to the function of the first power source 111 described above; the function of the controller battery 312 is equivalent to the function of the second power source 112 described above; the function of the relay 313 is equivalent to the function of the switch unit 210 described above; the high-power device 330 and the starter motor 321 are equivalent to the first device 120 described above; the VCU 340 and the ECU 350 is equivalent to the second device 130 described above.

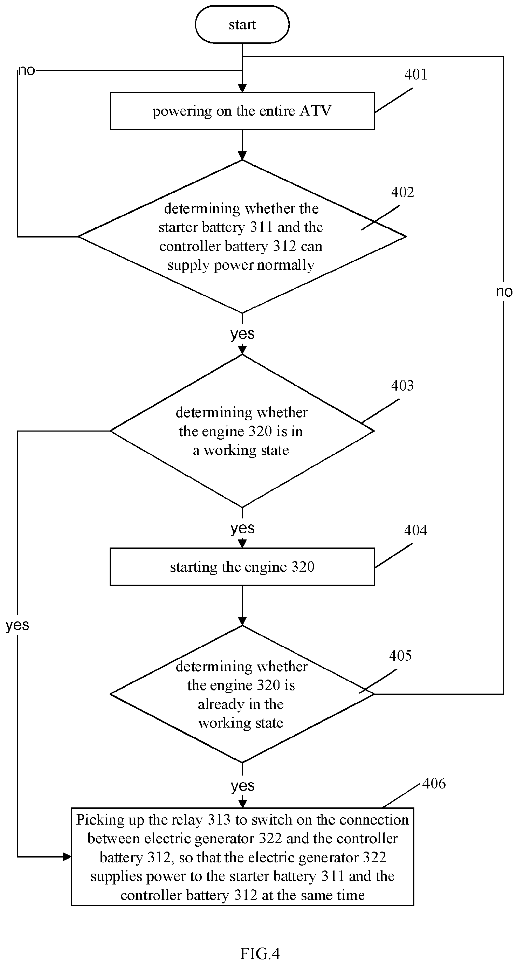

In actual application, exemplarily, based on the power supply system 310 illustrated in FIG. 3, as illustrated in FIG. 4, the operating process of power supply system for the all-terrain vehicle may specifically include Step 401 to Step 406.

Step 401: powering on the entire ATV; then step 402 is executed.

In actual application, the VCU 340 may control the entire vehicle of the all-terrain vehicle to power on when the VCU 340 detects that the ignition switch of the all-terrain vehicle is switched from an OFF state to an auxiliary equipment (ACC, ACCESSORY) state, and then from the ACC state to an ON state.

Step 402: determining whether the starter battery 311 and the controller battery 312 can supply power normally; if yes, execute step 403; if no, execute step 401, that is to control the all-terrain vehicle to power on again (this moment, that the starter battery 311 and the controller battery 312 cannot supply power normally is caused by the failure to power on the all-terrain vehicle).

In actual application, the VCU 340 can determine whether the starter battery 311 and the controller battery 312 are able to output power supply voltage to corresponding devices at work (that is supplying power to the corresponding devices).

Step 403: determining whether the engine 320 is in an operating state; if yes, execute step 406; if not, execute step 404.

In actual application, the VCU 340 can send a start signal to the ECU 350 when detects that the user needs to start the engine 320; after receiving the start signal, the ECU 350 can determine whether the engine 320 is in the operating state.

Specifically, after the entire all-terrain vehicle is powered on, the controller battery 312 supplies power to the VCU 340 and the ECU 350; at this moment, the relay 313 picks in, that is, the electric generator 322 and the controller battery 312 is not connected, which realizes the isolation of the controller battery 312 to prevent the controller battery 312 from being affected by the fluctuation of the power supply voltage of the starting battery 311. Here, the fluctuation of the power supply voltage of the starting battery 311 refers to the fluctuation of the power supply voltage generated by that the starting battery 311 supplies power to the high-power device 330 when the high-power device 330 is used, and fluctuation of the power supply voltage generated by supplying power to the start motor 321 when the engine 320 needs to be started.

In actual application, the VCU 340 may determine that the user needs to start the engine 320 when it detects the user operation of starting the engine 320. For example, the VCU 340 detects that the user presses the button or switch for starting the engine 320; of course, the VCU 340 can also determine that the user needs to start the engine 320 when it detects that the SOC of the starter battery 311 and the controller battery 312 are both less than the first threshold described above (that is, the electric generator 322 is needed to supply power to the starter battery 311 and the controller battery 312 at this moment).

Step 404: starting the engine 320; then execute step 405.

In actual application, the ECU 350 controls the starter battery 311 to supply power to the starter motor 321 through the VCU 340, so as to start the engine 320.

Step 405: determining whether the engine 320 is already in the operating state; if yes, execute step 406; if not, execute step 401.

In actual application, whether the engine 320 is in the operating state may be determined by the ECU 350; if it is determined that the engine 320 is already in an operating state, the engine 320 is successfully started, and the electric generator 322 starts to generate electricity; if it is determined that the engine 320 is in a non-operating state, the engine 320 fails to start, and the all-terrain vehicle needs to be controlled to power on again.

Step 406: picking in the relay 313 to switch on the connection between electric generator 322 and the controller battery 312, so that the electric generator 322 supplies power to the starter battery 311 and the controller battery 312.

Specifically, the ECU 350 may send a pick-in signal to the relay 313 to control the relay 313 to pick in. Here, only after the engine 320 is successfully started, will the relay 313 change from a disconnecting state to a pick-in state, and connect the electric generator 322 with the controller battery 312, so that the electric energy generated by the electric generator 322 can flow forward to the controller battery 312 and to supplement electric energy for the controller battery 312.

In actual application, the ECU 350 may send a disconnecting signal to the relay 313 when it detects the user operation of starting the high-power device 330 (for example, detects that the user presses the button to power on the air conditioner) through the VCU 340, that is, control the relay 313 to stop picking in, so that the connection between the generator 322 and the controller battery 312 is disconnected, and realize the isolation of the controller battery 312, that is, a power supply voltage of the controller battery 312 maintains stability and is not affected by the fluctuation of the power supply voltage caused by that the starter battery 311 supplies power to the high-power device 330. In addition, the ECU 350 may send a pick-in signal to the relay 313 to control the relay 313 to pick in when it detects the user operation of powering off the high-power device 330 (for example, detects that the user presses the button to power off the air conditioner) through the VCU 340, so as to switch on the connection between the generator 322 and the controller battery 312.

An embodiment of the present application also provides an all-terrain vehicle, including: a first seat and a second seat arranged in parallel, and the power supply system 110 described above; where a first power source 111 is arranged behind the first seat; and a second power source 112 is arranged behind the second seat.

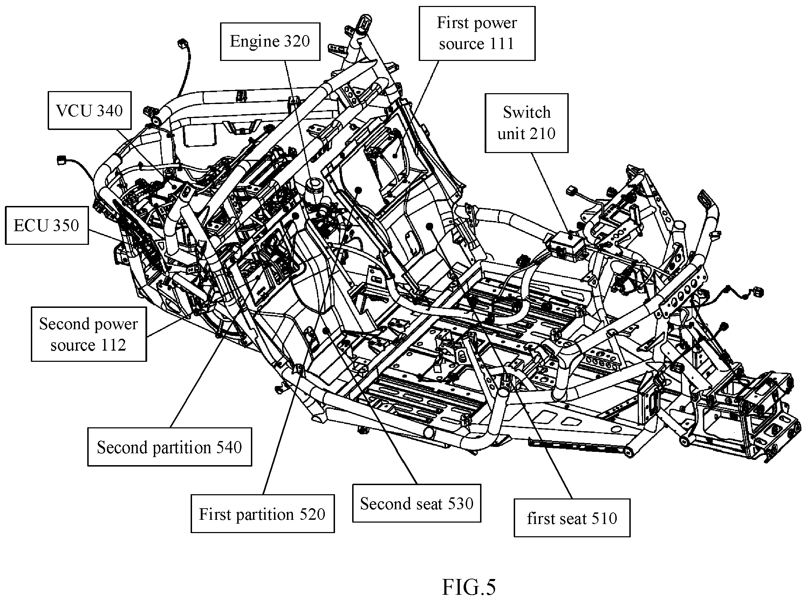

In actual application, the specific locations of the first power source 111 and the second power source 112 may be determined according to demands. Exemplarily, as illustrated in FIG. 5, a first partition 520 is arranged between the rear part of the first seat 510 and the engine 320, and the first power source 111 is arranged on the first partition 520; a second partition 540 is arranged between the rear part of the seat 530 and the engine 320, and the second power source 112 is arranged on the second partition 540. The switch unit 210 may be arranged in a power distribution box of the vehicle head; and the VCU 340 and the ECU 350 may be arranged behind the engine 320.

In practical applications, the first seat 510 may be a driver seat; and the second seat 530 may be a passenger seat. Of course, the first seat 510 may also be the passenger seat. In this case, the second seat 530 may be the driver seat.

The power supply system for the all-terrain vehicle and the all-terrain vehicle provided by the embodiments of the present application own the following advantages:

Firstly, when the first device having high electric power of the all-terrain vehicle needs to be used, the second power source separately supplies power to the second device having a high stability requirement for the power supply voltage. since the second power source does not need to supply power to the first device, the voltage supplied by the second power source to the second device can maintain stability. In this way, the loss/damage of the second device caused when supplying power to the all-terrain vehicle may be reduced, the service life of the second device may be prolonged, and the operating efficiency of the power supply system for the all-terrain vehicle can be improved.

Secondly, the isolation of the second power source is achieved through the switch unit, so that the voltage of the second power source is not affected by the voltage fluctuations generated when the first power source supplies power to the first device. This further makes the voltage supplied by the second power source to the second device maintain stability, and ensures that the second device can operate reliably and stably.

It should be noted that: "first", "second", etc. are used to distinguish similar objects, and not necessarily used to describe a specific order or sequence.

In addition, the technical solutions described in the embodiments of the present application can be combined arbitrarily under conditions without conflict.

The above are only preferred embodiments of the present application, and are not used to limit the protection scope of the application.

## Claims

1. An all-terrain vehicle, comprising:
a frame;
at least one seat (510, 530) arranged on the frame;
a first device (120);
a second device (130) being a micro-control unit, a required electric power of the first device (120) being greater than a required electric power of the second device (130), and the first device (120) having a lower stability requirement for a power supply voltage than the second device (130);
a power supply system (110) arranged behind the at least one seat (510, 530), the power supply system (110) comprising a first power source (111) and a second power source (112); wherein
the first power source (111) is configured to supply power to the first device (120); and the second power source (112) is configured to supply power to the second device (130).

2. The all-terrain vehicle according to claim 1, further comprising an electric generator (240; 322) configured to generate electric energy, the electric energy generated by the electric generator (240; 322) being used to supply power to the first power source (111) and the second power source (112).

3. The all-terrain vehicle according to claim 2, wherein the power supply system (110) further comprises a switch unit (210); wherein
the electric generator (240; 322) is configured to supply power to the second power source (112) when the switch unit (210) switches on a connection between the second power source (112) and the electric generator (240; 322).

4. The all-terrain vehicle according to claim 3, wherein
the switch unit (210) is configured to switch on the connection between the second power source (112) and the electric generator (240; 322) when receiving a first signal, the first signal indicating that startup of the all-terrain vehicle is completed.

5. The all-terrain vehicle according to claim 3, wherein
the switch unit (210) is configured to switch off the connection between the second power source (112) and the electric generator (240; 322) when receiving a second signal, the second signal indicating that the first device (120) needs to be started.

6. The all-terrain vehicle according to claim 3, wherein
the switch unit (210) is configured to switch on the connection between the second power source (112) and the electric generator (240; 322) when receiving a third signal, the third signal indicating that the first device (120) is turned off.

7. The all-terrain vehicle according to any one of claims 3-6, wherein the switch unit (210) comprises a relay (313); wherein
the switch unit (210) is configured to switch on the connection between the second power source (112) and the electric generator (240; 322) when the relay is in a pick-in state.

8. The all-terrain vehicle according to any one of claims 1-7, wherein the first device (120) comprises at least one of:
a starter motor (230; 321);
an on-board air conditioner;
an on-board audio; or
a winch motor;
wherein the starter motor (230; 321) is configured to start an engine (220; 320) of the all-terrain vehicle; the first power source (111) is configured to supply power to the starter motor (230; 321) when the engine (220; 320) needs to be started; and the starter motor (230; 321) is further configured to operate and drive the engine (220; 320) to start after being supplied with power.

9. The all-terrain vehicle according to any one of claims 1-7, wherein the second device (130) comprises at least one of:
a vehicle control unit;
an engine control unit; or
a motor control unit.

10. The all-terrain vehicle according to claim 1, wherein the at least one seat (510, 530) comprises: a first seat (510) and a second seat (530) arranged in parallel; wherein
the first power source (111) is arranged behind the first seat (510); and
the second power source (112) is arranged behind the second seat (530).

11. The all-terrain vehicle according to claim 10, wherein
a first partition (520) is arranged between a rear part of the first seat (510) and an engine (220; 320), and the first power source (111) is arranged on the first partition (520); and
a second partition (540) is arranged between a rear part of the second seat (530) and the engine (220; 320), and the second power source (112) is arranged on the second partition (540).

12. A method for powering the all-terrain vehicle according to one of claims 1-10, the all-terrain vehicle comprising a first power source configured to supply power to a first device of the all-terrain vehicle and a second power source configured to supply power to a micro-control unit of the all-terrain vehicle, the first device comprising an engine, the method comprising:
powering on (401) the all-terrain vehicle;
determining (403) whether the engine is in an operating state; and
turning on (406) a switch unit of the all-terrain vehicle to switch on a connection between the second power source and an electric generator of the all-terrain vehicle when it is determined that the engine is in an operating state, such that the electric generator supplies power to both the first power source and the second power source.

13. The method according to claim 12, further comprising:
starting (404) the engine when it is determined that the first device is not in the operating state;
supplying, by the electric generator, power to the first power source when the engine is started and drives operation of the electric generator such that the electric generator generates electric energy; and
turning on (406) the switch unit to switch on the connection between the second power source and the electric generator when startup of the first device is completed (405), such that the electric generator supplies power to the second power source.

14. The method according to claim 12, wherein the first device further comprises at least one of an on-board air conditioner; an on-board audio; or a winch motor, the method further comprises:
turning off the switch unit to switching off the connection between the second power source and the electric generator when detecting the at least one of the on-board air conditioner; the on-board audio; or the winch motor needs to be started.

15. The method according to claim 14, further comprises: turning on the switch unit to switching on the connection between the second power source and the electric generator when detecting the at least one of the on-board air conditioner; the on-board audio; or the winch motor is turned off.
